# EUROPEAN PATENT SPECIFICATION

(11) **EP 3 872 135 B1**
(45) Date of publication and mention of the grant of the patent: **04.01.2023**
(21) Application number: 19876590.1
(22) Date of filing: 05.08.2019
(51) Int. Cl.: C08L 83/07, C08K 3/22, C08K 5/5415, C08L 83/04, C08L 83/05, C08L 83/06

(54) **THERMALLY CONDUCTIVE SILICONE COMPOSITION AND CURED PRODUCT THEREOF**
WÄRMELEITFÄHIGE SILIKONZUSAMMENSETZUNG UND GEHÄRTETES PRODUKT DARAUS
COMPOSITION DE SILICONE THERMOCONDUCTRICE ET SON PRODUIT DURCI

(30) Priority: 26.10.2018 JP 2018201872
(43) Date of publication of application: 01.09.2021
(73) Proprietor: Shin-Etsu Chemical Co., Ltd., Tokyo 100-0005 (JP)
(72) Inventor: TSUKADA, Junichi, Annaka-shi, Gunma 379-0224 (JP); ISHIHARA, Yasuhisa, Annaka-shi, Gunma 379-0224 (JP); HIRONAKA, Yuya, Annaka-shi, Gunma 379-0224 (JP)
(74) Representative: Wibbelmann, Jobst
(86) International application number: PCT/JP2019/030644
(87) International publication number: WO 2020/084860

(56) References cited:
- WO-A1-2018/016566
- JP-A- 2010 120 979
- JP-A- 2011 016 923
- JP-A- 2011 089 079
- JP-A- 2011 178 821
- JP-A- 2013 189 498
- JP-A- 2014 118 484
- US-A1- 2013 248 163

## Description

### TECHNICAL FIELD

The present invention relates to a thermal conductive silicone composition and a cured product thereof.

### BACKGROUND ART

As higher performance, higher speed, miniaturization, and higher integration are achieved, LSI chips, such as CPUs, driver ICs, and memories used in electronic devices including personal computers, digital video disc players, cellular phones, and so forth generate large amounts of heat by themselves.

Such heat increases the chip temperature and causes the chips to malfunction and break down. Therefore, in order to suppress the temperature increase of chips during operation, many heat dissipation methods and heat dissipation members used for the methods have been proposed.

Heretofore, electronic devices and so forth employ a heat sink using a metal plate, such as aluminum or copper, with high heat conductivity to suppress the temperature increase of chips during operation. Such a heat sink conducts heat generated from chips and dissipates the heat from its surface according to temperature difference from the ambient air.

To efficiently transfer heat generated from chips to a heat sink, the heat sink needs to be arranged in the close vicinity of the chips. Nevertheless, due to height difference among the chips and tolerance in assembling, a flexible sheet or grease is interposed between chips and a heat sink to achieve heat conduction from the chips to the heat sink through the sheet or grease.

Sheets are superior to grease in handleability. Thermal conductive sheets (thermal conductive silicone rubber sheets) formed of thermal conductive silicone rubber or the like have been used in various fields.

Patent Document 1 discloses an insulating composition containing 100 parts by mass of a synthetic rubber, such as silicone rubber, blended with 100 to 800 parts by mass of at least one or more metal oxides selected from beryllium oxide, aluminum oxide, aluminum hydroxide, magnesium oxide, and zinc oxide.

Moreover, as a heat dissipation material used in an area where electrical insulation is not necessary, Patent Document 2 discloses a composition obtained by blending an addition-curable silicone rubber composition with 60 to 500 parts by mass of silica and a thermally conductive powder of silver, gold, silicon, or the like.

However, any of these thermal conductive materials have insufficient heat conductivity. Moreover, if the materials are filled with a large amount of a heat conductive filler at high density to enhance the heat conduction, the flowability is decreased in the case of liquid silicone rubber composition, while the plasticity is increased in the case of millable-type silicone rubber composition. In any case, there is a problem that the moldability is considerably lowered.

Hence, as a method for solving this, Patent Document 3 discloses a highly-thermal conductive rubber or plastic composition filled with: 10 to 30 mass% of alumina particles having an average particle size of 5 µm; and the remainder of spherical corundum alumina particles that are uniform particles having an average particle size of 10 µm or more and no cutting edge shape. Further, Patent Document 4 discloses a thermally conductive silicone rubber composition containing: 500 to 1,200 parts by mass of a spherical aluminum oxide powder; and a combination of a gummy organopolysiloxane having an average polymerization degree of 6,000 to 12,000 and an oily organopolysiloxane having an average polymerization degree of 200 to 2,000 as the base.

In a common method for enhancing the heat conductivity of silicone compositions, a polymer is filled with a heat conductive filler at higher density. Nevertheless, heat conductive fillers have higher specific gravity than silicone polymers, as represented by aluminum oxide (specific gravity: 3.9) and zinc oxide (specific gravity: 5.6). Accordingly, increasing the filling amount tends to increase the specific gravity of the composition.

Recently, in order that electric vehicles equipped with lithium ion batteries can run longer distances, efforts have been made to reduce the weight of the entire vehicles. Meanwhile, as to mobile devices and wearable devices which a person directly wears also, the weight is not negligible. Patent Document 5 discloses a silicone composition having a specific gravity of 2.0, in which a silicone polymer is filled with aluminum hydroxide having a low specific gravity (specific gravity: 2.42). Nevertheless, the heat conductivity of the composition is as low as about 1.5 W/m·K, and it is undeniable that the ability to cool heat generated from recent large-capacity devices is insufficient. WO2018/016566 discloses thermally conductive silicone compositions, and whose Examples 11 and 12 have a thermally conducting hydrosilylation curing polysiloxane composition comprising 26.26 pbw round shaped alumina of average particle diameter 3.3 µm and 19.7 pbw round alumina particles of average particle diameter 0.5 µm.

### CITATION LIST

### PATENT LITERATURE

Patent Document 1: JP S47-32400 A
Patent Document 2: JP S56-100849 A
Patent Document 3: JP H01-69661 A
Patent Document 4: JP H04-328163 A
Patent Document 5: JP 2011-89079 A

### SUMMARY OF INVENTION

### TECHNICAL PROBLEM

The present invention has been made in view of the above-described circumstances. An object of the present invention is to provide a thermal conductive silicone composition and a cured product thereof which result in a thermally-conductive resin molded product (thermal conductive silicone cured product) having both thermal conduction and light weight.

### SOLUTION TO PROBLEM

To achieve the object, the present invention provides a thermal conductive silicone composition comprising:
a component (A) that is an organopolysiloxane having at least two or more alkenyl groups per molecule and is contained in an amount of 100 parts by mass;
a component (B) that is an organohydrogenpolysiloxane having at least two or more hydrogen atoms directly bonded to silicon atoms and is contained in such an amount that the number of moles of hydrogen atoms directly bonded to silicon atoms in the component (B) is 0.1 to 5.0 times the number of moles of alkenyl groups derived from the component (A);
a component (C) that is a heat conductive filler contained in an amount of 2,800 to 4,000 parts by mass, wherein the heat conductive filler comprises aluminum hydroxide in an amount of 50 mass% or more, and the aluminum hydroxide is a mixture constituted of
   (C-1) 25 to 35 mass% of aluminum hydroxide having an average particle size of 0.1 µm or more and less than 40 µm, and
   (C-2) 65 to 75 mass% of aluminum hydroxide having an average particle size of 40 µm or more and 100 µm or less; and
a component (D) that is a platinum group metal-based curing catalyst having a platinum group metal element content of 0.1 to 1,000 ppm relative to the component (A) based on mass.

Such a thermal conductive silicone composition is capable of forming a thermally-conductive resin molded product (thermal conductive silicone cured product) having both thermal conduction and light weight.

Preferably, the thermal conductive silicone composition further comprises a component (E) in an amount of 100 to 300 parts by mass relative to 100 parts by mass of the component (A), wherein
the component (E) is any one or both of:
(E-1) an alkoxysilane compound shown by the following general formula (1); and
(E-2) a dimethylpolysiloxane blocked with a trialkoxysilyl group at one terminal of a molecular chain and shown by the following general formula (2),

   R¹ₐR²_{b}Si(OR³)_{4-a-b} (1)
wherein each R¹ independently represents an alkyl group having 6 to 15 carbon atoms, each R² independently represents an unsubstituted or substituted monovalent hydrocarbon group having 1 to 10 carbon atoms, each R³ independently represents an alkyl group having 1 to 6 carbon atoms, "a" represents an integer of 1 to 3, and "b" represents an integer of 0 to 2, provided that a+b is an integer of 1 to 3, and 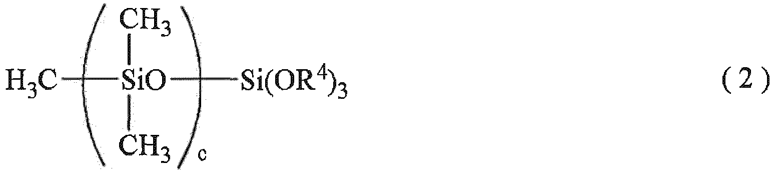 wherein each R⁴ independently represents an alkyl group having 1 to 6 carbon atoms, and "c" represents an integer of 5 to 100.

Such a thermal conductive silicone composition can form a thermally-conductive resin molded product (thermal conductive silicone cured product) having more excellent thermal conduction and lower weight.

Preferably, the thermal conductive silicone composition further comprises a component (F) that is an organopolysiloxane having a kinematic viscosity at 25°C of 10 to 100,000 mm²/s and shown by the following general formula (3), 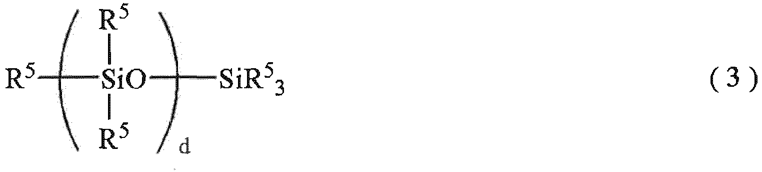 wherein each R⁵ independently represents a monovalent hydrocarbon group having 1 to 10 carbon atoms and no aliphatic unsaturated bond, and "d" represents an integer of 5 to 2,000.

Such a component (F) can impart appropriate viscosity, plasticity, and so forth to the thermal conductive silicone composition.

Additionally, the thermal conductive silicone composition preferably has an absolute viscosity at 25°C of 800 Pa·s or less.

Such a thermal conductive silicone composition is excellent in moldability.

In addition, the present invention provides a thermal conductive silicone cured product comprising a cured product of the thermal conductive silicone composition.

Such a thermal conductive silicone cured product is excellent in both thermal conduction and light-weight characteristic.

### ADVANTAGEOUS EFFECTS OF INVENTION

As described above, according to the inventive thermal conductive silicone composition, a silicone composition containing specific organopolysiloxane, hydrogenpolysiloxane, and heat conductive filler is elaborately adjusted and formulated, so that the base material is filled with the heat conductive filler at high density. This makes it possible to provide a thermal conductive silicone composition which results in a thermal conductive silicone cured product having high thermal conduction and light weight: a heat conductivity of 2.8 W/m·K or more and a specific gravity of 2.4 or less. Such a thermal conductive silicone cured product is useful, particularly for cooling electronic parts through thermal conduction, as a heat conducting material interposed at an interface between a thermal surface of a heat-generating electronic part and a heat dissipating member such as a heat sink or a circuit substrate.

### DESCRIPTION OF EMBODIMENTS

As noted above, there have been demands for the developments of a thermal conductive silicone cured product (thermal conductive resin molded product) having high thermal conduction and light weight, and a thermal conductive silicone composition for forming the cured product.

The present inventors have earnestly studied to achieve the above object and consequently found that a thermal conductive silicone cured product having high thermal conduction and light weight, such as a heat conductivity of 2.8 W/m·K or more and a specific gravity of 2.4 or less, can be obtained by elaborately adjusting and formulating a silicone composition containing specific organopolysiloxane, hydrogenpolysiloxane, and heat conductive filler to fill the base material with the heat conductive filler at high density. This finding has led to the completion of the present invention.

Specifically, the present invention is a thermal conductive silicone composition comprising:
a component (A) that is an organopolysiloxane having at least two alkenyl groups per molecule and is contained in an amount of 100 parts by mass;
a component (B) that is an organohydrogenpolysiloxane having at least two hydrogen atoms directly bonded to silicon atoms and is contained in such an amount that the number of moles of hydrogen atoms directly bonded to silicon atoms in the component (B) is 0.1 to 5.0 times the number of moles of alkenyl groups derived from the component (A);
a component (C) that is a heat conductive filler contained in an amount of 2,800 to 4,000 parts by mass, wherein the heat conductive filler comprises aluminum hydroxide in an amount of 50 mass% or more, and the aluminum hydroxide is a mixture constituted of
   (C-1) 25 to 35 mass% of aluminum hydroxide having an average particle size of 0.1 µm or more and less than 40 µm, and
   (C-2) 65 to 75 mass% of aluminum hydroxide having an average particle size of 40 µm or more and 100 µm or less; and
a component (D) that is a platinum group metal-based curing catalyst having a platinum group metal element content of 0.1 to 1,000 ppm relative to the component (A) based on mass.

Hereinafter, the present invention will be described in detail, but the present invention is not limited thereto.

The inventive thermal conductive silicone composition contains as essential components:
an organopolysiloxane having at least two alkenyl groups per molecule as the component (A);
an organohydrogenpolysiloxane having at least two hydrogen atoms directly bonded to silicon atoms as the component (B);
a heat conductive filler as the component (C) including 50 mass% or more of aluminum hydroxide that is a mixture constituted of 25 to 35 mass% of aluminum hydroxide having an average particle size of 0.1 µm or more and less than 40 µm and 65 to 75 mass% of aluminum hydroxide having an average particle size of 40 µm or more and 100 µm or less; and
a platinum group metal-based curing catalyst as the component (D). Hereinbelow, these components will be described.

### [Component (A): Alkenyl Group-Containing Organopolysiloxane]

The component (A) is an alkenyl group-containing organopolysiloxane in which the number of silicon atom-bonded alkenyl groups is at least two per molecule. The component (A) serves as a main component of the inventive composition. In general, the main chain portion is normally composed of repeated basic diorganosiloxane units, but this molecular structure may partially contain a branched structure, or may be a cyclic structure. Nevertheless, the main chain is preferably linear diorganopolysiloxane from the viewpoint of physical properties of the cured product, such as mechanical strength.

Functional groups other than the alkenyl group bonded to a silicon atom include an unsubstituted or substituted monovalent hydrocarbon group. Examples thereof include alkyl groups, such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups, such as a cyclopentyl group, a cyclohexyl group, and a cycloheptyl group; aryl groups, such as a phenyl group, a tolyl group, a xylyl group, a naphthyl group, and a biphenylyl group; aralkyl groups, such as a benzyl group, a phenylethyl group, a phenylpropyl group, and a methylbenzyl group; and groups obtained from these groups by substituting a part or all of hydrogen atoms bonded to a carbon atom(s) therein with a cyano group, a halogen atom, such as fluorine, chlorine, and bromine, or the like. Examples of such substituted groups include a chloromethyl group, a 2-bromoethyl group, a 3-chloropropyl group, a 3,3,3-trifluoropropyl group, a chlorophenyl group, a fluorophenyl group, a cyanoethyl group, a 3,3,4,4,5,5,6,6,6-nonafluorohexyl group, etc. Typical examples of the functional group include ones having 1 to 10 carbon atoms, and particularly typical examples thereof include ones having 1 to 6 carbon atoms. Preferable examples of the functional group include unsubstituted or substituted alkyl groups having 1 to 3 carbon atoms, such as a methyl group, an ethyl group, a propyl group, a chloromethyl group, a bromoethyl group, a 3,3,3-trifluoropropyl group, and a cyanoethyl group; and unsubstituted or substituted phenyl groups, such as a phenyl group, a chlorophenyl group, and a fluorophenyl group. Additionally, all the functional groups other than the alkenyl group bonded to a silicon atom do not have to be the same.

Furthermore, the alkenyl group normally has about 2 to 8 carbon atoms. Examples thereof include a vinyl group, an allyl group, a propenyl group, an isopropenyl group, a butenyl group, a hexenyl group, a cyclohexenyl group, etc. Among these, lower alkenyl groups, such as a vinyl group and an allyl group, are preferable and a vinyl group is particularly preferable. Note that the number of the alkenyl groups has to be two or more per molecule, and the alkenyl groups are each preferably bonded to only a silicon atom at a terminal of the molecular chain to make the resulting cured product have favorable flexibility.

This organopolysiloxane has a kinematic viscosity at 25°C in a range of preferably 10 to 100,000 mm²/s, particularly preferably 500 to 50,000 mm²/s. When the viscosity is 10 mm²/s or more, the resulting composition has favorable storage stability. Meanwhile, when the viscosity is 100,000 mm²/s or less, the resulting composition has favorable extensibility. Note that each kinematic viscosity is a value measured with an Ostwald viscometer.

One kind of the organopolysiloxane of the component (A) may be used alone, or two or more kinds thereof having different viscosity or the like may be used in combination.

### [Component (B): Organohydrogenpolysiloxane]

The component (B) is an organohydrogenpolysiloxane which has at least two, preferably 2 to 100, hydrogen atoms directly bonded to silicon atoms (Si-H groups) per molecule. This component works as a crosslinking agent of the component (A). Specifically, a Si-H group in the component (B) is added to an alkenyl group in the component (A) by a hydrosilylation reaction that is promoted by a platinum group metal-based curing catalyst as the component (D) to be described later, thereby forming a three-dimensional network structure having a crosslinked structure. Note that if the number of Si-H groups per molecule in the component (B) is less than 2, no curing occurs.

The organohydrogenpolysiloxane to be used can be shown by the following average structural formula (4), but is not limited thereto. 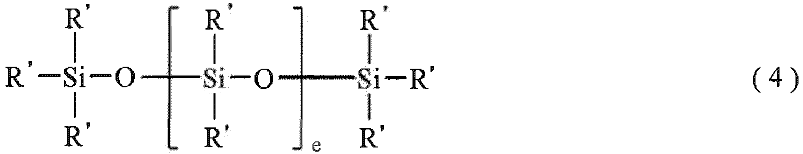 In the formula, each R' independently represents a hydrogen atom or an unsubstituted or substituted monovalent hydrocarbon group containing no aliphatic unsaturated bond, and at least two R's are hydrogen atoms. "e" represents an integer of 1 or more.

Examples of the unsubstituted or substituted monovalent hydrocarbon group containing no aliphatic unsaturated bond as R' other than hydrogen in the formula (4) include alkyl groups, such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups, such as a cyclopentyl group, a cyclohexyl group, and a cycloheptyl group; aryl groups, such as a phenyl group, a tolyl group, a xylyl group, a naphthyl group, and a biphenylyl group; aralkyl groups, such as a benzyl group, a phenylethyl group, a phenylpropyl group, and a methylbenzyl group; and groups obtained from these groups by substituting a part or all of hydrogen atoms bonded to a carbon atom(s) therein with a cyano group, a halogen atom, such as fluorine, chlorine, and bromine, or the like. Examples of such substituted groups include a chloromethyl group, a 2-bromoethyl group, a 3-chloropropyl group, a 3,3,3-trifluoropropyl group, a chlorophenyl group, a fluorophenyl group, a cyanoethyl group, a 3,3,4,4,5,5,6,6,6-nonafluorohexyl group, etc. Typical examples of the monovalent hydrocarbon group include ones having 1 to 10 carbon atoms, and particularly typical examples thereof include ones having 1 to 6 carbon atoms. Preferable examples of the monovalent hydrocarbon group include unsubstituted or substituted alkyl groups having 1 to 3 carbon atoms, such as a methyl group, an ethyl group, a propyl group, a chloromethyl group, a bromoethyl group, a 3,3,3-trifluoropropyl group, and a cyanoethyl group; and unsubstituted or substituted phenyl groups, such as a phenyl group, a chlorophenyl group, and a fluorophenyl group. Additionally, all R's do not have to be the same.

The amount of the component (B) added is such that, relative to 1 mole of alkenyl groups derived from the component (A), the amount of Si-H groups derived from the component (B) is 0.1 to 5.0 moles (i.e., the number of moles of the hydrogen atoms directly bonded to silicon atoms is 0.1 to 5.0 times the number of moles of the alkenyl groups derived from the component (A)), preferably 0.3 to 2.0 moles, further preferably 0.5 to 1.0 moles. If the amount of the Si-H groups derived from the component (B) is less than 0.1 moles relative to 1 mole of the alkenyl groups derived from the component (A), no curing occurs, or the strength of the cured product is so insufficient that the molded product cannot keep the shape and cannot be handled in some cases. Meanwhile, if the amount exceeds 5.0 moles, the cured product may become inflexible and brittle.

### [Component (C): Heat Conductive Filler]

The component (C) is a heat conductive filler constituted of aluminum hydroxide, or aluminum hydroxide and a different heat conductive filler. Here, the aluminum hydroxide has to be incorporated in an amount of 50 mass% or more, preferably 75 mass% or more, further preferably 80 mass% or more, most preferably 100 mass%, of a total amount of heat conductive fillers from the viewpoint of weight reduction. If the proportion is less than 50 mass%, the resulting specific gravity exceeds 2.4 (this value is equivalent to the specific gravity of aluminum hydroxide), and the light-weight characteristic is impaired.

Aluminum hydroxide is inexpensive and has a specific gravity of 2.42, which is quite lower than that of alumina. Moreover, aluminum hydroxide suppresses precipitation of the heat conductive filler in the silicone composition, and also contributes to the weight reduction of devices. Further, aluminum hydroxide has a Mohs hardness of 3 and is very soft in comparison with alumina. Abrasion of a reaction furnace and stirring blade is suppressed, and aluminum hydroxide is useful as a heat conductive filler having flame-retarding effect and insulating effect. However, aluminum hydroxide has a lower heat conductivity than alumina. Hence, when aluminum hydroxide is used to increase the heat conductivity of a silicone thermal conductive composition and a cured product thereof, filling with the aluminum hydroxide at high density is required. Nonetheless, such high-density filling is very difficult. For this reason, it has been presumably difficult to produce a thermal conductive silicone cured product having a heat conductivity of 2.6 W/m·K or more in which aluminum hydroxide accounts for 50 mass% or more of the total parts by mass of heat conductive fillers. The present invention overcomes this problem of conventional techniques by elaborately adjusting and formulating a silicone composition containing specific organopolysiloxane, hydrogenpolysiloxane, and heat conductive filler to fill the base material with the heat conductive filler at high density. The present invention provides a thermal conductive silicone composition which results in a thermal conductive silicone cured product having high thermal conduction and light weight.

In addition, the component (C) needs to contain aluminum hydroxide in an amount of 50 mass% or more. Furthermore, the aluminum hydroxide needs to be a mixture constituted of
(C-1) aluminum hydroxide having an average particle size of 0.1 µm or more and less than 40 µm: 25 to 35 mass%, and
(C-2) aluminum hydroxide having an average particle size of 40 µm or more and 100 µm or less: 65 to 75 mass%.
In this manner, particles including aluminum hydroxide with different particle sizes as main components are elaborately combined. Specifically, small-diameter particles having an average particle size of 0.1 µm or more and less than 40 µm and larger-diameter particles having an average particle size of 40 µm or more and 100 µm or less are combined at a carefully-examined blend ratio. This enables the high-density filling in the base material in such a manner that the small-diameter particles fill gaps among the larger-diameter particles. Meanwhile, if each average particle size of the aluminum hydroxides as the components (C-1) and (C-2) is outside the ranges, or if the constituent proportions of the components (C-1) and (C-2) are outside the ranges, these hinder the preparation of a thermal conductive silicone composition which results in a thermal conductive silicone cured product having such high thermal conduction and light weight as a heat conductivity of 2.8 W/m·K or more and a specific gravity of 2.4 or less.

Note that each average particle size is a value of volume-based cumulative average particle size (median size) measured with a particle size analyzer Microtrac MT3300EX manufactured by Nikkiso Co., Ltd.

The small-diameter aluminum hydroxide (filler) of the component (C-1) in combination with the larger-diameter aluminum hydroxide of the component (C-2) enhances the heat conductivity and flowability of the composition and prevents the precipitation of the filler. The average particle size of the small-diameter aluminum hydroxide is 0.1 µm or more and less than 40 µm, preferably 1 to 30 µm. If the average particle size is outside the ranges, the effects of enhancing the heat conductivity and flowability of the composition and preventing the filler precipitation in combination with the component (C-2) are not obtained. One or two or more kinds of the aluminum hydroxide of the component (C-1) may be used as a composite.

The component (C-1) is blended in an amount of 25 to 35 mass%, preferably 27 to 33 mass%, of the aluminum hydroxide included in the component (C). If the mass proportion is outside the ranges, the effects of enhancing the heat conductivity and flowability of the composition and preventing the filler precipitation attributable to the combination with the component (C-2) are not obtained.

The larger-diameter aluminum hydroxide (filler) of the component (C-2) enables significant enhancement of the heat conductivity. The average particle size of the larger-diameter aluminum hydroxide is 40 µm or more and 100 µm or less, preferably 45 to 90 µm. If the average particle size is outside the ranges, the effect of enhancing the thermal conduction is decreased, the viscosity of the composition is increased, or the processability is lowered. One or two or more kinds of the aluminum hydroxide of the component (C-2) may be used as a composite.

The component (C-2) is blended in an amount of 65 to 75 mass%, preferably 67 to 73 mass%, of the aluminum hydroxide included in the component (C). If the mass proportion is outside the ranges, the effect of enhancing the thermal conduction is decreased, the viscosity of the composition is increased, or the processability is lowered.

In this manner, the effects of the present invention noted above are surely exhibited by using the component (C) incorporating 50 mass% or more of the aluminum hydroxide in which the aluminum hydroxide (C-1) having an average particle size of 0.1 µm or more and less than 40 µm and the aluminum hydroxide (C-2) having an average particle size of 40 µm or more and 100 µm or less are blended at the certain ratio.

The different heat conductive filler is not particularly limited. It is possible to use materials generally considered to be a heat conductive filler, for example, non-magnetic metal, such as copper or aluminum; metal oxide, such as alumina, silica, magnesia, colcothar, beryllia, titania, or zirconia; metal nitride, such as aluminum nitride, silicon nitride, or boron nitride; metal hydroxide, such as magnesium hydroxide; artificial diamond, silicon carbide, etc. Additionally, the particle size of 0.1 to 200 µm may be employed. One or two or more kinds thereof may be used as a composite.

The component (C) has to be blended in an amount (a total blending amount of the aluminum hydroxide, or the aluminum hydroxide and the different heat conductive filler) of 2,800 to 4,000 parts by mass, preferably 3,000 to 3,500 parts by mass, relative to 100 parts by mass of the component (A). If this blend amount is less than 2,800 parts by mass, the resulting composition has poor heat conductivity. If the blend amount exceeds 4,000 parts by mass, the kneading operability is impaired, and the cured product becomes significantly brittle.

### [Component (D): Platinum Group Metal-Based Curing Catalyst]

The component (D) is a platinum group metal-based curing catalyst and is not particularly limited, as long as the catalyst promotes an addition reaction of an alkenyl group derived from the component (A) and a Si-H group derived from the component (B). Examples of the catalyst include well-known catalysts used in hydrosilylation reaction. Specific examples include: platinum group metal simple substances, such as platinum (including platinum black), rhodium, and palladium; platinum chloride, chloroplatinic acid, and chloroplatinate, such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂, and Na₂HPtCl₄·nH₂O (here, in the formulae, "n" is an integer of 0 to 6, preferably 0 or 6); alcohol-modified chloroplatinic acid (see specification of USP No. 3,220,972); complexes of chloroplatinic acid with olefin (see USP Nos. 3,159,601 specification, 3,159,662 specification, and 3,775,452 specification); ones obtained by supporting a platinum group metal, such as platinum black and palladium, on a support, such as alumina, silica, or carbon; a rhodium-olefin complex, chlorotris(triphenylphosphine)rhodium (Wilkinson catalyst); complexes of platinum chloride, chloroplatinic acid, or chloroplatinate with a vinyl group-containing siloxane, particularly a vinyl group-no more containing cyclic siloxane; etc.

The component (D) is used in such an amount that the platinum group metal element content is 0.1 to 1,000 ppm relative to the component (A) based on mass. If the content is less than 0.1 ppm, sufficient catalyst activity is not obtained. If the content exceeds 1,000 ppm, the cost is merely increased without enhancing the effect of promoting the addition reaction, and the catalyst remaining in the cured product may decrease the insulating property, too.

### [Component (E): Surface Treatment Agent]

The inventive composition can be blended with a component (E) that is a surface treatment agent in order to uniformly disperse the heat conductive filler of the component (C) in a matrix of the component (A) by hydrophobizing the heat conductive filler of the component (C) during the composition preparation to improve the wettability with the organopolysiloxane of the component (A). As the component (E), a component (E-1) and a component (E-2) described below are particularly preferable.

Component (E-1): an alkoxysilane compound shown by the following general formula (1),

R¹ₐR²_{b}Si(OR³)_{4-a-b} (1)

where each R¹ independently represents an alkyl group having 6 to 15 carbon atoms, each R² independently represents an unsubstituted or substituted monovalent hydrocarbon group having 1 to 10 carbon atoms, each R³ independently represents an alkyl group having 1 to 6 carbon atoms, "a" represents an integer of 1 to 3, and "b" represents an integer of 0 to 2, provided that a+b is an integer of 1 to 3.

Examples of the alkyl group represented by R¹ in the general formula (1) include a hexyl group, an octyl group, a nonyl group, a decyl group, a dodecyl group, a tetradecyl group, etc. When the number of carbon atoms in the alkyl group represented by R¹ satisfies the range of 6 to 15, the wettability of the component (A) is sufficiently enhanced, resulting in excellent handleability. Moreover, the composition has favorable low temperature characteristics.

Examples of the unsubstituted or substituted monovalent hydrocarbon group represented by R² include alkyl groups, such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups, such as a cyclopentyl group, a cyclohexyl group, and a cycloheptyl group; aryl groups, such as a phenyl group, a tolyl group, a xylyl group, a naphthyl group, and a biphenylyl group; aralkyl groups, such as a benzyl group, a phenylethyl group, a phenylpropyl group, and a methylbenzyl group; and groups obtained from these groups by substituting a part or all of hydrogen atoms bonded to a carbon atom(s) therein with a cyano group, a halogen atom, such as fluorine, chlorine, and bromine, or the like. Examples of such substituted groups include a chloromethyl group, a 2-bromoethyl group, a 3-chloropropyl group, a 3,3,3-trifluoropropyl group, a chlorophenyl group, a fluorophenyl group, a cyanoethyl group, a 3,3,4,4,5,5,6,6,6-nonafluorohexyl group, etc. Typical examples of the monovalent hydrocarbon group include ones having 1 to 10 carbon atoms, and particularly typical examples thereof include ones having 1 to 6 carbon atoms. Preferable examples of the monovalent hydrocarbon group include unsubstituted or substituted alkyl groups having 1 to 3 carbon atoms, such as a methyl group, an ethyl group, a propyl group, a chloromethyl group, a bromoethyl group, a 3,3,3-trifluoropropyl group, and a cyanoethyl group; and unsubstituted or substituted phenyl groups, such as a phenyl group, a chlorophenyl group, and a fluorophenyl group. Examples of R³ include a methyl group, an ethyl group, a propyl group, a butyl group, a hexyl group, etc. Further, "a" and "b" are not particularly limited, as long as "a" is an integer of 1 to 3, "b" is an integer of 0 to 2, and a+b is an integer of 1 to 3. Preferably, "a" is 1 and "b" is 0.

Component (E-2): a dimethylpolysiloxane blocked with a trialkoxysilyl group at one terminal of a molecular chain and shown by the following general formula (2), 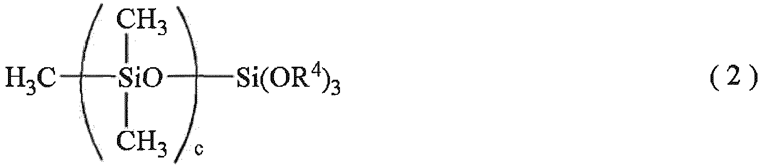 where each R⁴ independently represents an alkyl group having 1 to 6 carbon atoms, and "c" represents an integer of 5 to 100, preferably 5 to 70, particularly 10 to 50.

The kinds of the alkyl group represented by R⁴ in the general formula (2) are the same as those of the alkyl group represented by R³ in the general formula (1).

As the surface treatment agent of the component (E), any one or both of the component (E-1) and the component (E-2) may be blended alone or in combination. Here, the component (E) is in an amount of preferably 100 to 300 parts by mass, particularly preferably 150 to 250 parts by mass, relative to 100 parts by mass of the component (A). The component (E) in an amount of 100 parts by mass or more facilitates sufficient filling of the base material with the heat conductive filler. The component (E) in amount of 300 parts by mass or less does not induce oil separation.

### [Component (F): Property-Imparting Agent]

As a component (F), it is possible to add an organopolysiloxane having a kinematic viscosity at 25°C of 10 to 100,000 mm²/s and shown by the following general formula (3), 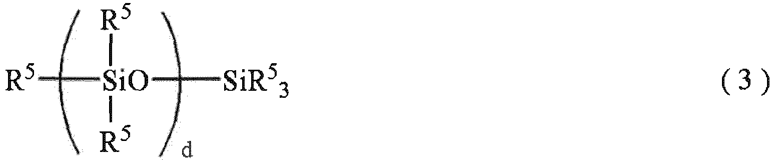 where each R⁵ independently represents a monovalent hydrocarbon group having 1 to 10 carbon atoms and no aliphatic unsaturated bond; and "d" represents an integer of 5 to 2,000.

The component (F) is used as appropriate in order to impart properties as a viscosity adjuster, plasticizer, and so forth for the thermal conductive silicone composition, but is not limited thereto. One kind of these may be alone, or two or more kinds thereof may be used in combination.

Each R⁵ independently represents an unsubstituted or substituted monovalent hydrocarbon group having 1 to 10 carbon atoms. Examples of R⁵ include alkyl groups, such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups, such as a cyclopentyl group, a cyclohexyl group, and a cycloheptyl group; aryl groups, such as a phenyl group, a tolyl group, a xylyl group, a naphthyl group, and a biphenylyl group; aralkyl groups, such as a benzyl group, a phenylethyl group, a phenylpropyl group, and a methylbenzyl group; and groups obtained from these groups by substituting a part or all of hydrogen atoms bonded to a carbon atom(s) therein with a cyano group, a halogen atom, such as fluorine, chlorine, and bromine, or the like. Examples of such substituted groups include a chloromethyl group, a 2-bromoethyl group, a 3-chloropropyl group, a 3,3,3-trifluoropropyl group, a chlorophenyl group, a fluorophenyl group, a cyanoethyl group, a 3,3,4,4,5,5,6,6,6-nonafluorohexyl group, etc. Typical examples of the monovalent hydrocarbon group include ones having 1 to 10 carbon atoms, and particularly typical examples thereof include ones having 1 to 6 carbon atoms. Preferable examples of the monovalent hydrocarbon group include unsubstituted or substituted alkyl groups having 1 to 3 carbon atoms, such as a methyl group, an ethyl group, a propyl group, a chloromethyl group, a bromoethyl group, a 3,3,3-trifluoropropyl group, and a cyanoethyl group; and unsubstituted or substituted phenyl groups, such as a phenyl group, a chlorophenyl group, and a fluorophenyl group. A methyl group and a phenyl group are particularly preferable.
"d" is preferably an integer of 5 to 2,000, particularly preferably an integer of 10 to 1,000, from the viewpoint of required viscosity.

Moreover, the kinematic viscosity at 25°C is preferably 10 to 100,000 mm²/s, particularly preferably 100 to 10,000 mm²/s. When the kinematic viscosity is 10 mm²/s or more, the cured product of the resulting composition hardly exhibits oil bleeding. When the kinematic viscosity is 100,000 mm²/s or less, the resulting thermal conductive silicone composition has suitable flexibility.

When the component (F) is added to the inventive thermal conductive silicone composition, the addition amount is not particularly limited, but is preferably 0.1 to 100 parts by mass relative to 100 parts by mass of the component (A). When the addition amount is in this range, this makes it easy to maintain the favorable flowability and operability of the thermal conductive silicone composition before curing, and to fill the composition with the heat conductive filler of the component (C).

### [Component (G): Reaction Inhibitor]

As a component (G), an addition reaction inhibitor is usable. As the addition reaction inhibitor, any of known addition reaction inhibitors used in usual addition reaction-curable silicone compositions can be employed. Examples thereof include acetylene compounds, such as 1-ethynyl-1-hexanol and 3-butyn-1-ol, various nitrogen compounds, organophosphorus compounds, oxime compounds, organochlorine compounds, etc. When the component (G) is blended, the use amount is preferably 0.01 to 1 parts by mass, more preferably 0.1 to 0.8 parts by mass, relative to 100 parts by mass of the component (A). With such a blend amount, the curing reaction proceeds sufficiently, and the molding efficiency is not impaired.

### [Other Components]

The inventive thermal conductive silicone composition may be further blended with other component(s), as necessary. Examples of the blendable optional components include heat resistance improvers, such as iron oxide and cerium oxide; viscosity adjusters, such as silica; colorants; release agents; etc.

### [Viscosity of Composition]

The thermal conductive silicone composition has an absolute viscosity (hereinafter may be simply referred to as "viscosity") at 25°C of preferably 800 Pa·s or less, more preferably 400 Pa·s or less, further preferably 200 Pa·s or less. The lower limit value is not particularly limited and can be, for example, 10 Pa·s or more. Note that this viscosity is based on the measurement with a B-type viscometer.

### [Thermal Conductive Silicone Cured Product, and Production Method therefor]

A thermal conductive silicone cured product (thermally-conductive resin molded product) according to the present invention is a cured product of the above-described thermal conductive silicone composition. The curing conditions of curing (molding) the thermal conductive silicone composition may be the same as those for known addition reaction-curable silicone rubber compositions. For example, the thermal conductive silicone composition is sufficiently cured at normal temperature, too, but may be heated as necessary. Preferably, the thermal conductive silicone composition is subjected to addition curing at 100 to 120°C for 8 to 12 minutes. Such a cured product (molded product) of the present invention is excellent in thermal conduction.

### [Heat Conductivity of Molded Product]

The inventive molded product has a heat conductivity of preferably 2.8 W/m·K or more, which is a measurement value measured at 25°C by hot disc method. The product having a heat conductivity of 2.8 W/m·K or more is applicable to heat-generating members which generate large amounts of heat. Note that such a heat conductivity can be adjusted by coordinating the type of the heat conductive filler or combination of the particle sizes.

### [Hardness of Molded Product]

The inventive molded product has a hardness of preferably 60 or less, more preferably 30 or less, further preferably 20 or less, particularly preferably 10 or less, which are measurement values measured at 25°C with an Asker C hardness tester. The product having a hardness of 60 or less deforms along the shape of a member from which heat is dissipated, and easily exhibits favorable heat-dissipating property without causing stress on the member. Note that such a hardness can be adjusted by changing the proportions of the component (A) and the component (B) to adjust the crosslinking density.

### EXAMPLE

Hereinafter, the present invention will be specifically described by showing Examples and Comparative Examples. However, the present invention is not limited to the following Examples. Note that each kinematic viscosity was measured at 25°C with an Ostwald viscometer. Moreover, each average particle size is a value of volume-based cumulative average particle size (median size) measured with a particle size analyzer Microtrac MT3300EX manufactured by Nikkiso Co., Ltd. The absolute viscosity at 25°C of each obtained thermal conductive silicone composition was measured with a B-type viscometer.

### [Composition Preparation]

Components (A) to (G) used in the following Examples and Comparative Examples are shown below. Component (A):
an organopolysiloxane shown by the following formula (5) 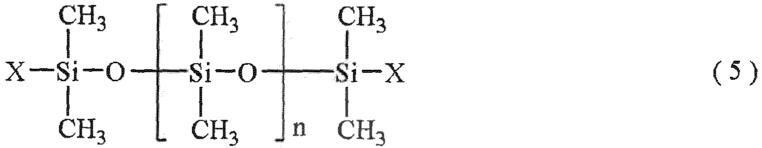 (X represents a vinyl group, and "n" represents the number resulting in the following viscosity.)

Kinematic viscosity: 600 mm²/s

Component (B):
a hydrogenpolysiloxane shown by the following formula (6). 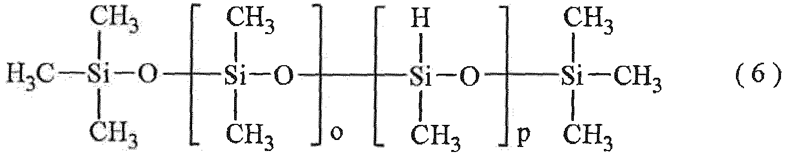 (average polymerization degrees: o=28, p=2)

Component (C):
aluminum hydroxide and spherical aluminum oxide having average particle sizes as follows.
(C-1) aluminum hydroxide with an average particle size of 1 µm
(C-2) aluminum hydroxide with an average particle size of 50 µm
(C-3) spherical aluminum oxide with an average particle size of 90 µm
Component (D):
   a 2-ethyl hexanol solution of 5 mass% of chloroplatinic acid

Component (E): component (E-2)
a dimethylpolysiloxane shown by the following formula (7) with an average polymerization degree of 30 and having one terminal blocked with a trimethoxysilyl group.

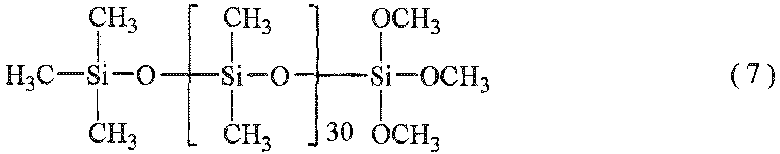

Component (F)
a dimethylpolysiloxane as a plasticizer shown by the following formula (8). 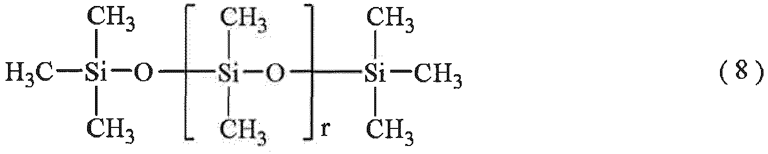 (r=80)

Component (G):
ethynyl methylidene carbinol as an addition reaction inhibitor.

The components (A), (C), (E), and (F) were added in predetermined amounts shown later under Examples 1 to 8 and Comparative Examples 1 to 6 in Table 1 or 2, and kneaded with a planetary mixer for 60 minutes.

To the mixture, the components (D) and (G) were added in predetermined amounts shown later in Table 1 or 2. Further, an effective amount of an internal release agent for promoting separation from a separator was added, and the mixture was kneaded for 30 minutes.

To the resultant, the component (B) was further added in a predetermined amount shown later in Table 1 or 2, and kneaded for 30 minutes. Thus, compositions of Examples 1 to 8 and Comparative Examples 1, 3, 4 were obtained. Meanwhile, in Comparative Examples 2, 5, 6, the kneading was difficult, and no compositions were obtained. Hence, the following evaluations were not performed in Comparative Examples 2, 5, 6.

### [Molding Method]

The obtained compositions were each poured into a mold with a size of 60 mm×60 mm×6 mm, and molded using a press molding machine at 120°C for 10 minutes.

### [Evaluation Methods]

### Heat conductivity:

Under conditions of 120°C and 10 minutes, the compositions obtained in the following Examples 1 to 8 and Comparative Examples 1, 3, 4 were cured into sheet form with a thickness of 6 mm. Two sheets from each composition were used to measure the heat conductivity with a thermal conductivity meter (product name: TPA-501, manufactured by Kyoto Electronics Manufacturing Co., Ltd) .

### Hardness:

The compositions obtained in the following Examples 1 to 8 and Comparative Examples 1, 3, 4 were cured into sheet form with a thickness of 6 mm as described above. Two sheets from each composition were stacked on each other and measured with an Asker C hardness tester.

### Specific gravity (density):

The measurement was performed by employing a water displacement method.

### [Examples 1 to 8 and Comparative Examples 1 to 6]

As shown in Tables 1 and 2, compositions were prepared using predetermined amounts of the components (A) to (F) in Examples 1 to 8 and Comparative Examples 1, 3, 4, and they were cured. The resultants were measured in terms of heat conductivity, hardness, and specific gravity according to the above-described evaluation methods.

**[Table 1]**

| Component (parts by mass) | | Example | | | | | | | |
|---|---|---|---|---|---|---|---|---|---|
| | | 1 | 2 | 3 | 4 | 5 | 6 | 7 | 8 |
| (A) | | 100 | 100 | 100 | 100 | 100 | 100 | 100 | 100 |
| (B) | | 17 | 17 | 17 | 17 | 17 | 17 | 17 | 17 |
| (C) | (C-1) | 1000 | 900 | 1100 | 1000 | 1000 | 1000 | 1000 | 1000 |
| | (C-2) | 2200 | 1900 | 2400 | 2000 | 1200 | 2200 | 2200 | 2200 |
| | (C-3) | 0 | 0 | 0 | 600 | 1500 | 0 | 0 | 0 |
| Total amount of component (C) | | 3200 | 2800 | 3500 | 3600 | 3700 | 3200 | 3200 | 3200 |
| (D) | | 1.0 | 1.0 | 1.0 | 1.0 | 1.0 | 1.0 | 1.0 | 1.0 |
| (E) | | 200 | 200 | 200 | 200 | 200 | 100 | 200 | 300 |
| (F) | | 56 | 56 | 56 | 68 | 89 | 200 | 100 | 0 |
| (G) | | 0.43 | 0.43 | 0.43 | 0.43 | 0.43 | 0.43 | 0.43 | 0.43 |
| Heat conductivity (W/m·K) | | 3.12 | 2.84 | 3.41 | 3.18 | 3.29 | 2.83 | 2.98 | 2.86 |
| Specific gravity | | 2.07 | 1. 98 | 2.16 | 2.19 | 2.34 | 2.10 | 2.06 | 2.05 |
| Sheet hardness (Asker C) | | 20 | 18 | 25 | 21 | 20 | 18 | 25 | 15 |
| Composition viscosity (Pa·s) | | 125 | 100 | 165 | 150 | 102 | 109 | 101 | 116 |

**[Table 2]**

| Component (parts by mass) | | Comparative Example | | | | | |
|---|---|---|---|---|---|---|---|
| | | 1 | 2 | 3 | 4 | 5 | 6 |
| (A) | | 100 | 100 | 100 | 100 | 100 | 100 |
| (B) | | 17 | 17 | 17 | 17 | 17 | 17 |
| (C) | (C-1) | 800 | 1700 | 1000 | 1000 | 3200 | 0 |
| | (C-2) | 1800 | 3800 | 800 | 0 | 0 | 3200 |
| | (C-3) | 0 | 0 | 2100 | 2200 | 0 | 0 |
| Total amount of Component (C) | | 2600 | 5500 | 3900 | 3200 | 3200 | 3200 |
| (D) | | 1.0 | 1.0 | 1.0 | 1.0 | 1.0 | 1.0 |
| (E) | | 0.43 | 0.43 | 0.43 | 0.43 | 0.43 | 0.43 |
| (F) | | 200 | 300 | 200 | 200 | 200 | 200 |
| (G) | | 56 | 56 | 56 | 56 | 56 | 56 |
| Heat conductivity (W/m·K) | | 2.54 | impossible to knead the composition | 3.97 | 3.65 | impossible to knead the composition | impossible to knead the composition |
| Specific gravity | | 2.04 | | 2.47 | 2.56 | | |
| Sheet hardness (Asker C) | | 15 | | 19 | 25 | | |
| Composition viscosity (Pa·s) | | 84 | | 110 | 620 | | |

When the total parts by mass of the heat conductive fillers were small as in Comparative Example 1, the heat conductivity was lowered. In contrast, when the amount were too large as in Comparative Example 2, the kneading for composition preparation was difficult. Moreover, when a heat conductive filler constituted of aluminum hydroxide in a proportion below 50% was used as in Comparative Examples 3, 4, the heat conductivity was high, but the specific gravity exceeded 2.4 and the light-weight characteristic was impaired. Further, when heat conductive fillers with uniform particle size were used as in Comparative Examples 5, 6, the base materials were not filled with the particles and no compositions were obtained.

Meanwhile, when the components (A) to (D) were blended at proportions within the scope of the present invention as in Examples, it was possible to easily prepare a thermal conductive silicone composition which resulted in a thermal conductive silicone cured product having high thermal conduction and light weight: a heat conductivity of 2.8 W/m·K or more and a specific gravity of 2.4 or less. Particularly, high-density filling of the base material was facilitated by elaborately-coordinated combination of aluminum hydroxide having different particle sizes, that is, combining small-diameter aluminum hydroxide having an average particle size of 0.1 µm or more and less than 40 µm with larger-diameter aluminum hydroxide having an average particle size of 40 µm or more and 100 µm or less at the elaborately-coordinated blend ratios.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A thermal conductive silicone composition comprising:
a component (A) that is an organopolysiloxane having two or more alkenyl groups per molecule and is contained in an amount of 100 parts by mass;
a component (B) that is an organohydrogenpolysiloxane having two or more hydrogen atoms directly bonded to silicon atoms and is contained in such an amount that the number of moles of hydrogen atoms directly bonded to silicon atoms in the component (B) is 0.1 to 5.0 times the number of moles of alkenyl groups derived from the component (A);
a component (C) that is a heat conductive filler contained in an amount of 2,800 to 4,000 parts by mass, wherein the heat conductive filler comprises aluminum hydroxide in an amount of 50 mass% or more, and the aluminum hydroxide is a mixture constituted of
(C-1) 25 to 35 mass% of aluminum hydroxide having an average particle size of 0.1 µm or more and less than 40 µm, and
(C-2) 65 to 75 mass% of aluminum hydroxide having an average particle size of 40 µm or more and 100 µm or less; and
a component (D) that is a platinum group metal-based curing catalyst having a platinum group metal element content of 0.1 to 1,000 ppm relative to the component (A) based on mass.

2. The thermal conductive silicone composition according to claim 1, further comprising a component (E) in an amount of 100 to 300 parts by mass relative to 100 parts by mass of the component (A), wherein
the component (E) is any one or both of:
a component (E-1) that is an alkoxysilane compound shown by the following general formula (1),
R¹ₐR²_{b}Si(OR³)_{4-a-b} (1)
wherein each R¹ independently represents an alkyl group having 6 to 15 carbon atoms, each R² independently represents an unsubstituted or substituted monovalent hydrocarbon group having 1 to 10 carbon atoms, each R³ independently represents an alkyl group having 1 to 6 carbon atoms, "a" represents an integer of 1 to 3, and "b" represents an integer of 0 to 2, provided that a+b is an integer of 1 to 3; and
a component (E-2) that is a dimethylpolysiloxane blocked with a trialkoxysilyl group at one terminal of a molecular chain and shown by the following general formula (2), 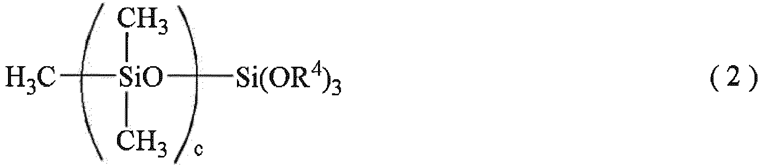 wherein each R⁴ independently represents an alkyl group having 1 to 6 carbon atoms, and "c" represents an integer of 5 to 100.

3. The thermal conductive silicone composition according to claim 1 or 2, further comprising a component (F) that is an organopolysiloxane having a kinematic viscosity measured in accordance with the method indicated in the description at 25°C of 10 to 100,000 mm²/s and shown by the following general formula (3), 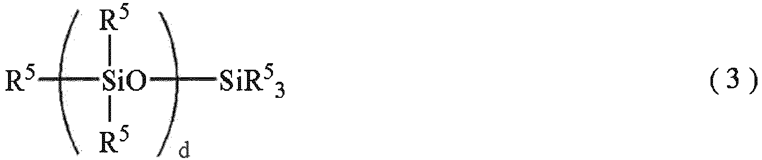 wherein each R⁵ independently represents a monovalent hydrocarbon group having 1 to 10 carbon atoms and no aliphatic unsaturated bond, and "d" represents an integer of 5 to 2,000.

4. The thermal conductive silicone composition according to any one of claims 1 to 3, wherein the thermal conductive silicone composition has an absolute viscosity measured in accordance with the method indicated in the description at 25°C of 800 Pa·s or less.

5. A thermal conductive silicone cured product comprising a cured product of the thermal conductive silicone composition according to any one of claims 1 to 4.

## Patentansprüche

1. Wärmeleitende Silikonzusammensetzung, die Folgendes umfasst:
eine Komponente (A), die ein Organopolysiloxan mit zwei oder mehr Alkenylgruppen pro Molekül ist und in einer Menge von 100 Masseteilen enthalten ist;
eine Komponente (B), bei der es sich um ein Organohydrogenpolysiloxan mit zwei oder mehr direkt an Siliziumatome gebundenen Wasserstoffatomen handelt und die in einer solchen Menge enthalten ist, dass die Anzahl der Mole der direkt an Siliziumatome gebundenen Wasserstoffatome in der Komponente (B) das 0,1- bis 5,0-fache der Anzahl der Mole der von der Komponente (A) abgeleiteten Alkenylgruppen beträgt;
eine Komponente (C), bei der es sich um einen wärmeleitenden Füllstoff handelt, der in einer Menge von 2.800 bis 4.000 Masseteilen enthalten ist, wobei der wärmeleitende Füllstoff Aluminiumhydroxid in einer Menge von 50 Massenprozent oder mehr umfasst und das Aluminiumhydroxid eine Mischung ist, die aus
(C-1) 25 bis 35 Masse-% Aluminiumhydroxid mit einer durchschnittlichen Teilchengröße von 0,1 µm oder mehr und weniger als 40 µm und
(C-2) 65 bis 75 Masse-% Aluminiumhydroxid mit einer durchschnittlichen Teilchengröße von 40 µm oder mehr und 100 µm oder weniger; und
eine Komponente (D), bei der es sich um einen Härtungskatalysator auf Basis eines Metalls der Platingruppe handelt, der einen Gehalt an Metallelementen der Platingruppe von 0,1 bis 1.000 ppm, bezogen auf die Komponente (A), aufweist.

2. Wärmeleitende Silikonzusammensetzung nach Anspruch 1, die ferner eine Komponente (E) in einer Menge von 100 bis 300 Masseteilen, bezogen auf 100 Masseteile der Komponente (A), enthält, wobei
der Bestandteil (E) eines oder beides der folgenden Elemente ist:
eine Komponente (E-1), die eine Alkoxysilanverbindung der folgenden allgemeinen Formel (1) ist,
R¹ₐR²_{b}Si(OR³)_{4-a-b} (1)
worin jedes R¹ unabhängig eine Alkylgruppe mit 6 bis 15 Kohlenstoffatomen darstellt, jedes R² unabhängig eine unsubstituierte oder substituierte einwertige Kohlenwasserstoffgruppe mit 1 bis 10 Kohlenstoffatomen darstellt, jedes R³ unabhängig eine Alkylgruppe mit 1 bis 6 Kohlenstoffatomen darstellt, "a" eine ganze Zahl von 1 bis 3 darstellt und "b" eine ganze Zahl von 0 bis 2 darstellt, vorausgesetzt, dass a+b eine ganze Zahl von 1 bis 3 ist; und
eine Komponente (E-2), bei der es sich um ein Dimethylpolysiloxan handelt, das mit einer Trialkoxysilylgruppe an einem Ende einer Molekülkette blockiert ist und durch die folgende allgemeine Formel (2) dargestellt wird, 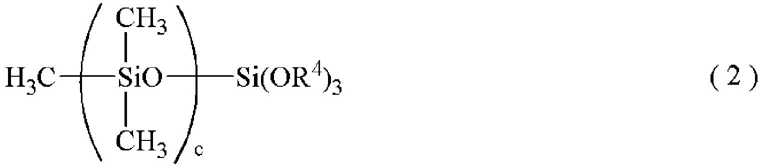 worin jedes R⁴ unabhängig eine Alkylgruppe mit 1 bis 6 Kohlenstoffatomen darstellt und "c" eine ganze Zahl von 5 bis 100 darstellt.

3. Wärmeleitende Silikonzusammensetzung nach Anspruch 1 oder 2, die ferner eine Komponente (F) enthält, die ein Organopolysiloxan mit einer kinematischen Viskosität, gemessen nach dem in der Beschreibung angegebenen Verfahren bei 25°C, von 10 bis 100.000 mm² /s ist und durch die folgende allgemeine Formel (3) dargestellt wird, 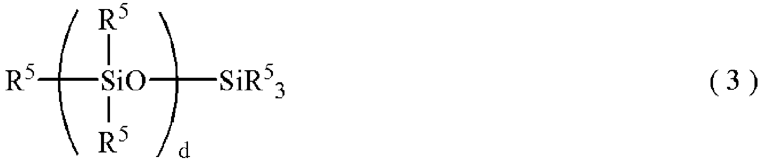 worin jedes R⁵ unabhängig eine einwertige Kohlenwasserstoffgruppe mit 1 bis 10 Kohlenstoffatomen und keiner aliphatischen ungesättigten Bindung darstellt und "d" eine ganze Zahl von 5 bis 2.000 darstellt.

4. Wärmeleitende Silikonzusammensetzung nach einem der Ansprüche 1 bis 3, wobei die wärmeleitende Silikonzusammensetzung eine absolute Viskosität, gemessen nach dem in der Beschreibung angegebenen Verfahren bei 25°C, von 800 Pa-s oder weniger aufweist.

5. Wärmeleitendes Silikonhärtungsprodukt, das ein gehärtetes Produkt der wärmeleitenden Silikonzusammensetzung nach einem der Ansprüche 1 bis 4 umfasst.

## Revendications

1. Composition de silicone thermoconductrice comprenant :
un constituant (A) qui est un organopolysiloxane ayant deux groupes alcényle ou plus par molécule et qui est contenu en une quantité de 100 parties en masse ;
un constituant (B) qui est un organohydrogénopolysiloxane ayant deux atomes d'hydrogène ou plus, directement liés à des atomes de silicium, et qui est contenu en une quantité telle que le nombre de moles d'atomes d'hydrogène directement liés à des atomes de silicium dans le constituant (B) est de 0,1 à 5,0 fois le nombre de moles de groupes alcényle dérivés du constituant (A) ;
un constituant (C) qui est une charge thermoconductrice contenue en une quantité de 2 800 à 4 000 parties en masse, dans laquelle la charge thermoconductrice comprend de l'hydroxyde d'aluminium en une quantité de 50 % en masse ou plus, et l'hydroxyde d'aluminium est un mélange constitué de
(C-1) 25 à 35 % en masse d'hydroxyde d'aluminium ayant une granulométrie moyenne de 0,1 µm ou plus et inférieure à 40 µm, et
(C-2) 65 à 75 % en masse d'hydroxyde d'aluminium ayant une granulométrie moyenne de 40 µm ou plus et de 100 µm ou moins ; et
un constituant (D) qui est un catalyseur de durcissement à base de métal du groupe du platine ayant une teneur en éléments métalliques du groupe du platine de 0,1 à 1000 ppm par rapport au constituant (A) sur la base de masse.

2. Composition de silicone thermoconductrice selon la revendication 1, comprenant en outre un constituant (E) en une quantité de 100 à 300 parties en masse par rapport à 100 parties en masse du constituant (A), dans laquelle
le constituant (E) est l'un quelconque ou les deux :
d'un constituant (E-1) qui est un composé alcoxysilane représenté par la formule générale (1) suivante,
R¹ₐR²_{b}Si(OR³)_{4-a-b} (1)
dans laquelle chaque R¹ représente indépendamment un groupe alkyle ayant de 6 à 15 atomes de carbone, chaque R² représente indépendamment un groupe hydrocarboné monovalent non substitué ou substitué ayant de 1 à 10 atomes de carbone, chaque R³ représente indépendamment un groupe alkyle ayant de 1 à 6 atomes de carbone, « a » représente un nombre entier de 1 à 3, et « b » représente un nombre entier de 0 à 2, à condition que a+b soit un nombre entier de 1 à 3 ; et
d'un constituant (E-2) qui est un diméthylpolysiloxane bloqué avec un groupe trialcoxysilyle à une extrémité d'une chaîne moléculaire et est représenté par la formule générale (2) suivante, 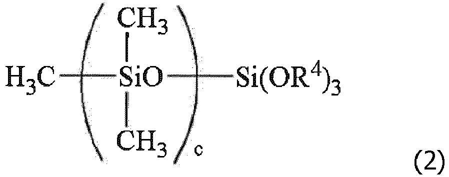
dans laquelle chaque R⁴ représente indépendamment un groupe alkyle ayant de 1 à 6 atomes de carbone, et « c » représente un nombre entier de 5 à 100.

3. Composition de silicone thermoconductrice selon la revendication 1 ou 2, comprenant en outre un constituant (F) qui est un organopolysiloxane ayant une viscosité cinématique mesurée selon la méthode indiquée dans la description à 25°C de 10 à 100 000 mm²/s et est représenté par la formule générale (3) suivante, 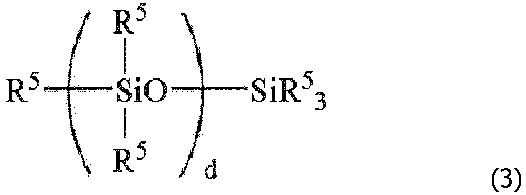 dans laquelle chaque R⁵ représente indépendamment un groupe hydrocarboné monovalent ayant de 1 à 10 atomes de carbone et aucune liaison aliphatique insaturée, et « d » représente un nombre entier de 5 à 2 000.

4. Composition de silicone thermoconductrice selon l'une quelconque des revendications 1 à 3, dans laquelle la composition de silicone thermoconductrice a une viscosité absolue mesurée selon la méthode indiquée dans la description à 25 °C de 800 Pa.s ou moins.

5. Produit durci en silicone thermoconductrice comprenant un produit durci de la composition de silicone thermoconductrice selon l'une quelconque des revendications 1 à 4.
